# EUROPEAN PATENT SPECIFICATION

(11) **EP 1 394 775 B1**
(45) Date of publication and mention of the grant of the patent: **09.05.2007**
(21) Application number: 03255430.5
(22) Date of filing: 29.08.2003
(51) Int. Cl.: G11B 5/48

(54) **Pivot assembly for hard disk drive use**
Achslagerung zur Verwendung in einem Plattenlaufwerk
Ensemble pivot pour utilisation dans un disque-dur

(30) Priority: 29.08.2002 JP 2002250446
(43) Date of publication of application: 03.03.2004
(60) Divisional application: 07006364.9
(73) Proprietor: MINEBEA Co., Ltd., Kitasaku-gun, Nagano-Ken 389-0293 (JP)
(72) Inventor: Toshisada, Koyama, Nagano-Ken, 389-0293 (JP)
(74) Representative: Wilson Gunn

(56) References cited:
- US-A- 5 529 404
- US-A- 5 547 291

## Description

The present invention relates to a pivot assembly used as the bearing of a swing arm system actuator in a hard disk drive.

In a conventional pivot assembly utilized in a hard disk drive, a shaft having a flange on one of its ends is supported by ball bearings. At least one ball bearing is mounted at each end of the shaft such that the ball bearings are separated by a spacer or sleeve and held at a predetermined distance from each other. The pivot assembly is sealed by a seal member placed at the upper end of the shaft. The seal member insures that gas and dirt generated by the ball bearings are not discharged into the clean environment of the hard disk drive. Thus, to solve the problem of outgassing, conventional pivot assemblies use a seal member fixed to the shaft, typically by bonding.

However, with the above arrangement there is still the problem that gas is discharged from the bonding agent fixing the seal member to the shaft. This outgassing brings about a harmful effect on the surface of the hard disk and magnetic head. In order to solve this kind of outgassing problem, the seal member is sometimes press-fixed onto a shaft. However, when fixing is accomplished by pressing in, it is difficult to exercise required control of the allowance for pressing in resulting in lack of reliability of the attachment of the seal member. Furthermore, the problem of outgassing from the bonding agent still remains even after the actions of pressing in, bonding and reliably fixing a seal member to a shaft are performed.

In the conventional pivot assembly, ball bearings, shaft and sleeve (spacer) are fixed by means of a bonding agent. In this conventional assembly, pre-load has to be applied to the ball bearings before the inner rings and outer rings are completely bonded. In order to obtain this pre-load, the pivot assembly is attached to a jig, and by means of the spring strength of the jig or the weight of a weight, the inner ring of the ball bearing of one side is pressed to a side of the other ball bearing. The force is applied so as to eliminate the axial internal clearance that exists between the inner and outer rings and balls of the bearing. The bonding agent applied to the pressed side of the inner ring of the ball bearing has to be in an unhardened state so as to allow the inner ring to move in the axial direction. After the inner ring is properly positioned, the pivot assembly is heated in a heating furnace in the pre-loaded state, and the unhardened state bonding agent is completely hardened.

Thus, in the conventional structure, because the pivot assembly must be carried into the heating furnace while being attached to a jig to apply the pre-load, a large quantity of jigs is required. Moreover, jigs have to be made of a material that is heat resistant. The described conventional method results in a high manufacturing cost of the pivot assembly due to great expense of the jigs and a substantial amount of work required for the attachment and removal of jigs to and from the pivot assemblies. While the necessity to make jigs heat resistant can be eliminated by use of a UV hardening adhesive as the bonding agent, the other disadvantages of conventional pivot assemblies will remain.
US-A-5547291 discloses a pivot assembly for use in a hard disc drive comprising a pair of bearings.
US-A-5529404 discloses a spindle motor comprising bearings laser welded to a hub.

The present invention was conceived to solve the problems of the prior art described above and its object is to provide a pivot assembly which can reduce the expense and time required to accomplish the pre-load of a ball bearing. It is also an object of the present invention to provide a pivot assembly wherein a seal member is reliably fixed without causing the out gas.

In one general aspect, the invention provides a pivot assembly for use in a hard disk drive in which ball bearings mounted at each end of a shaft are spaced from each other by a spacer joined to a sleeve also disposed between the ball bearings. The spacer and the sleeve are disposed between the outer rings of the ball bearings. A seal member covering an outer end of each ball bearing is fixed to the outer circumference of the shaft by laser welding.

In the provided pivot assembly for hard disk drive use, the seal member is reliably fixed by laser welding to the outer circumference of the shaft without causing the out gas. Furthermore, in the pivot assembly of the present invention the pre-load work is also simplified.

The above advantages and features are of representative embodiments only. It should be understood that they are not to be considered limitations on the invention as defined by the claims. Additional features and advantages of the invention will become apparent in the following description and from the claims.

A full understanding of the invention can be gained from the following description of the preferred embodiments when read in conjunction with the accompanying drawings in which:

Fig. 1 is a side cross-sectional view showing the pivot assembly of the first embodiment of the present invention.

Fig. 2 is an enlarged side cross-sectional view of a welded part.

Fig. 3 is the arrow lll direction view of Fig. 1.

Fig. 4 is a view showing a modified example of Fig. 3.

Fig. 5 is a side cross-sectional view showing the pivot assembly of the second embodiment of the present invention.

Fig. 6 is a side cross-sectional view showing the pivot assembly of the third embodiment of the present invention.

Fig. 7 is an enlarged side cross-sectional view of a welded part.

Fig. 8 is the arrow VIII direction view of Fig. 6.

Fig. 9 is a view showing a modified example of Fig. 8.

Fig. 10 is a side cross-sectional view showing the pivot assembly of the fourth embodiment of the present invention.

As shown in the accompanying figures, the invention provides a pivot assembly which reduces the expense and time required to accomplish the pre-load of a ball bearing and reliably fixes a seal member to the provided assembly without causing the out gas.

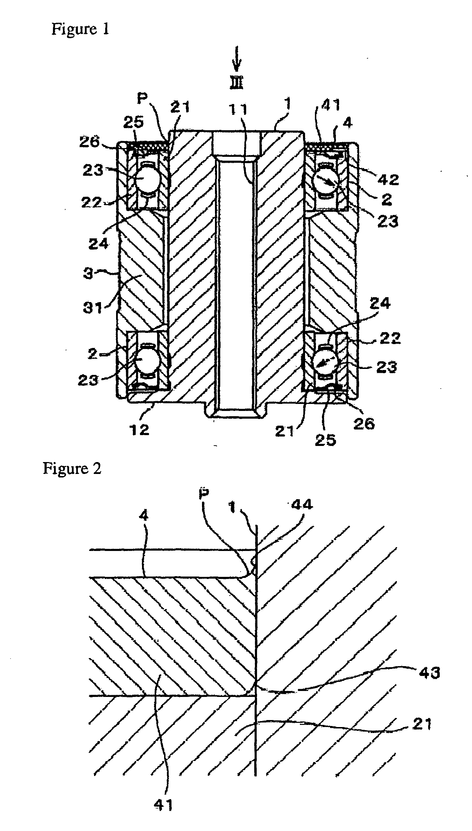

As shown in Fig. 1 and in accordance with a first embodiment of the present invention, shaft 1 is supported by at least two ball bearings 2. Shaft 1 is provided with through going screw hole 11 formed along the axial center of the shaft. Ball bearings are arranged in a pivot assembly which can be attached to the hard disk drive by a bolt screwed into the screw hole 11. Flange 12 is formed at the lower end of the shaft. One of the two ball bearings 2 is mounted on the outer circumferential surface of the lower end of the shaft such that a bottom surface of the ball bearing contacts the upper surface of flange 12.

Each ball bearing 2 is provided with inner ring 21, outer ring 22 and multiple balls 23 that can roll in a circumferential direction between the inner and the outer rings. Balls 23 are held at regular intervals in a circumferential direction by retainer 24. An opening side of each ball bearing, for example the side facing flange 12 for the lower bearing, is sealed by seal 25. Seal 25 is secured by snap ring 26. Ball bearing provided at the upper end of shaft 1 is preferably pressed in.

Sleeve 3 is provided in the pivot assembly to support and separate ball bearings 2. Sleeve 3 is preferably fixed to the outer circumferential surface of the outer rings of ball bearings 2 as shown in Fig. 1. Spacer part 31 is formed integrally with sleeve 3 in its central part. An inner diameter of the spacer part is smaller than the inner diameter of the end parts of the sleeve. Side walls of spacer part 31 contact an inner circumferential surface of outer rings 22 of ball bearings 2, thus separating the ball bearings from each other by a set interval. Seal member 4 is fixed to the upper end of shaft 1. The seal member is preferably formed in a ring shape and has inner circumferential portion 41 and outer circumferential portion 42, the outer circumferential portion being thinner than the inner circumferential portion.

Seal member 4 is formed by press blanking from a metal plate. As shown in Fig. 2, as a result of press blanking, inner circumferential portion 41 is formed with an arc-shaped chamfer 43, on the side where the punch has penetrated, and concave sharp edge 44, formed on the side where the punch was pushed out due to thickness die wear or burrs. Edge 44 has a straight surface located adjacently to shaft 1 and a concave surface not being adjacent to the shaft. Edge 44 preferably has an edge radius of 0.1 mm or less. Seal member 4 is joined to the outer circumferential surface of shaft 1 at the concave sharp edge of the seal member. Inner circumferential portion 41 of the seal member contacts the outer circumferential surface of inner ring 21 of ball bearing 2. Outer circumferential portion 42 of the seal member is distanced slightly from the inner circumferential surface of the end portion of sleeve 3.

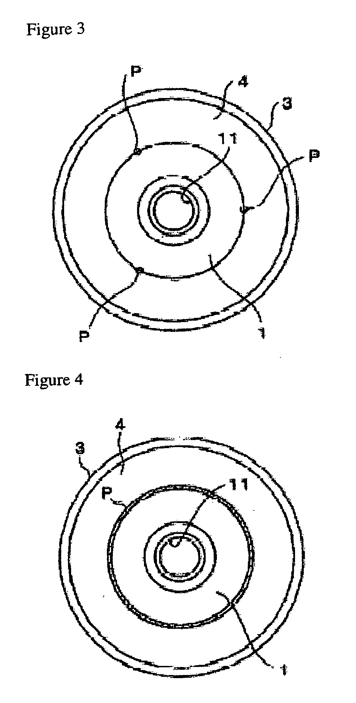

Seal member 4 is fixed to the outer circumferential surface of shaft 1 by laser welding along the concave sharp edge 44. As shown in Fig. 3, a nugget is created due to welding, indicated by reference numeral P. Seal member 4 may be spot welded to shaft 1 at multiple places (3 places in this embodiment) located at regular intervals in the circumferential direction. Furthermore, as shown in Fig. 4, laser welding along the entire circumference of concave sharp edge 44 of seal member 4 can also be performed.

The base of a swing arm provided with a magnetic head at its tip is attached to the outer circumference of the pivot assembly. The swing arm moves annularly centered on the pivot assembly by means of a drive mechanism such as a voice coil motor. The magnetic head of the tip moves along the surface of the hard disk.

The pivot assembly is manufactured in the following manner. First, a bonding agent is applied to the inner circumferential surface of sleeve 3, and spacer part 31 is joined to it. As mentioned above, the spacer part 31 may be formed integrally with sleeve 3. Ball bearings 2 are then placed onto shaft 1 such that the inner surfaces of their outer rings contact side surfaces of the spacer part. A bonding agent is then applied to the outer circumference of the lower end of shaft 1, and seal member 4 is joined to it. When seal member 4 is joined to the upper end part of shaft 1 by laser welding, the end surface thereof contacts inner ring 21 of ball bearing 2. As such, seal member 4 is pressed and pre-load is applied.

The hardening method for the bonding agent differs depending on the bonding agent used. In the case of a UV bonding agent, the area of application of the agent is irradiated by ultraviolet rays to cause hardening. An anaerobic adhesive should be left to dry, and epoxy system and other thermo-hardening adhesive should be put into an oven to be heated and hardened. These bonding agents have their respective characteristics and it is necessary to use them properly depending on the place of use. For example, because a UV bonding agent is applicable to the extent that the area of application can be irradiated by ultraviolet rays, gap bonding is unsuitable. On the other hand, anaerobic adhesive may be more reliable when heated and hardened but may require more expensive heating equipment and more work.

Generally, in the assembly of a pivot assembly, a UV anaerobic bonding agent is used but more particularly a thermo-hardening bonding agent is selected because of its bonding strength providing higher reliability and its higher safety due to the lower out gas. The bonding agent that has protruded at the time of joining can be hardened by UV irradiation because the part that bulges out is exposed to the outside where UV irradiation is possible. Consequently, UV anaerobic adhesive that has both UV and anaerobic action is better suitable for use with the present invention. Furthermore, recent adhesives that have all three actions, i.e., UV anaerobic thermo-hardening adhesives, may also be used. In terms of increasing the reliability of bonding and reduction of out gas, a thermo-hardening type adhesive is most suitable.

As shown by the arrow in Fig. 1, when pre-load is applied upwardly with respect to inner ring 21 of the first ball bearing 2, the force thereof is sequentially transmitted to balls 23 of the first ball bearing 2, outer ring 22 of the first ball bearing 2, spacer part 31 of sleeve 3, outer ring 22 of the second ball bearing 2 and inner ring 21 of the second ball bearing 2. The action is such that inner ring 21 pushes outer ring 22 outwardly via balls 23. By means of this sequence, the play between inner ring 21, balls 23 and outer ring 22 is eliminated and rotating precision is obtained. The state in which this kind of pre-load has been applied is maintained, and concave sharp edge 44 of seal member 4 is laser welded. When seal member 4 is fixed to shaft 1, the applied pre-load is maintained in ball bearing 2. In this state, the pivot assembly is put into the heating oven and the bonding agent is completely hardened. When the bonding agent used is a UV bonding agent, it is put into a UV irradiating device to be hardened by UV irradiation such that shaft 1 with the lower seal member, and spacer part 31 with sleeve 3 are fixed by means of a bonding agent.

Because the upper seal member 4 is fixed by laser welding to the outer circumferential surface of shaft 1, the attachment between the seal member and the shaft is secure and reliable. The problem of the out gas emitted from the upper seal member 4 is also solved. When the upper seal member 4 is fixed by means of a bonding agent the out gas generated from the bonding agent is liable to directly exert an influence on the disk. However, when it is fixed by laser welding without using a bonding agent, as provided in the present invention, that kind of problem does not occur. Furthermore, because seal member 4 is fixed to the shaft 1 and the pre-load is applied, the final hardening treatment can be provided to the pivot assembly without using a jig. Consequently, the jig manufacturing expense and the work in attaching and removing jigs to/from the pivot assembly becomes unnecessary.

In the above-mentioned first embodiment, seal member 4 is joined to shaft 1 so that the surface that faces the press blanking direction becomes the upper side, and is laser welded to the shaft at concave sharp edge 44 formed on inner circumferential portion 41. Thus, there is no gap or a concave part formed between seal member 4 and shaft 1, and a laser beam can be appropriately irradiated. Furthermore, by welding along concave sharp edge 44 an adherence strength equivalent to that of a built-up welding can be obtained.

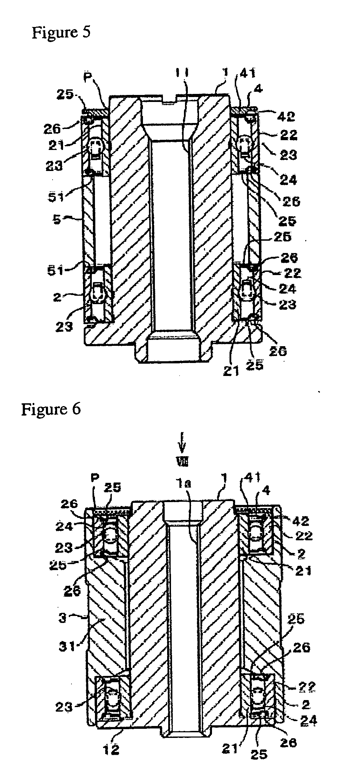

As shown in Fig. 5 and in accordance with a second embodiment of the present invention, the integral combination of sleeve 3 and spacer part 31 may be replace with a single spacer 5.

Spacer 5 is preferably ring shaped to have an outer diameter equal to the outer diameter of ball bearing 2. Spacer 5 extends within the gap between outer rings 22 of the two ball bearings and separates them at a set distance, i.e., the length of the spacer. The inner circumferential edge of the end face of spacer 5 is shaped as convex line 51 protruding in the axial direction. A matching concave part is formed along the inner circumferential edge of the end face of outer ring 22. A connection between the spacer and the outer ring is achieved by joining convex line 51 with the concave part of outer ring 22, both being positioned on concentric circles.

Similarly to the first embodiment, seal member 4 of the second embodiment is preferably formed in a ring shape and has inner circumferential portion 41 and outer circumferential portion 42, the outer circumferential portion being thinner than the inner circumferential portion. Seal member 4 is formed by press blanking from a metal plate. As shown in Fig. 2, as a result of press blanking, inner circumferential portion 41 is formed with an arc-shaped chamfer 43 and concave sharp edge 44. Edge 44 has a straight surface located adjacently to shaft 1 and a concave surface not being adjacent to the shaft. Seal member 4 is joined to the outer circumferential surface of shaft 1 at the concave sharp edge of the seal member. Inner circumferential portion 41 of the seal member contacts the outer circumferential surface of inner ring 21 of ball bearing 2. Seal member 4 is fixed to the outer circumferential surface of shaft 1 by laser welding along the concave sharp edge 44. As shown in Fig. 3, a nugget is created due to welding, indicated by reference numeral P. Seal member 4 may be spot welded to shaft 1 at multiple places (3 places in this embodiment) located at regular intervals in the circumferential direction. Furthermore, as shown in Fig. 4, laser welding along the entire circumference of concave sharp edge 44 of seal member 4 can also be performed.

The pivot assembly of the second embodiment can be manufactured by the same method as that of the first embodiment.

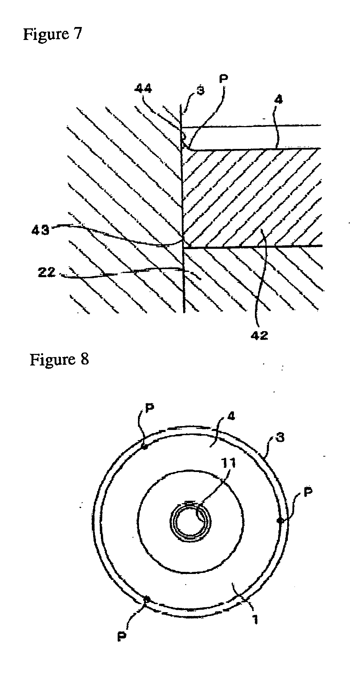

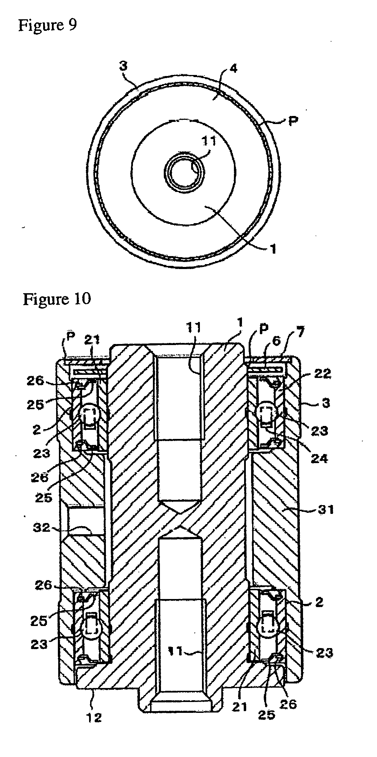

As shown in Figs. 6-9 and in accordance with a third embodiment of the present invention, seal member 4 is laser welded to the inner circumferential surface of the end portion of sleeve 3. As shown in Fig. 8, weld nuggets are created due to welding, indicated by reference numeral P. Seal member 4 may be spot welded to shaft 1 at multiple places (3 places in this embodiment) located at regular intervals in the circumferential direction. Furthermore, as shown in Fig. 9, laser welding along the entire circumference of concave sharp edge 44 of seal member 4 can also be performed. In the third embodiment, because the end face of the outer circumferential portion 42 of seal member 4 contacts outer ring 22, the outer circumferential portion is formed thicker than inner circumferential portion 41.

Seal member 4 is formed by press blanking from a metal plate. As shown in Fig. 7, as a result of press blanking, outer circumferential portion 42 is formed with an arc-shaped chamfer 43 and concave sharp edge 44. Edge 44 has a straight surface located adjacently to sleeve 3 and a concave surface not being adjacent to the sleeve. Seal member 4 is joined to the inner circumferential surface of sleeve 3 at the concave sharp edge of the seal member by laser welding along edge 44.

The pivot assembly of the third embodiment can be manufactured by the same method as that of the first embodiment.

In accordance with a fourth embodiment of the present invention shown in Fig. 10, first seal member 6, preferably formed as a hub cap, is laser welded to the outer circumference of the upper end of shaft 1, and second seal member 7, preferably provided above the first seal member, is laser welded to the inner circumference of sleeve 3. The first and second seal members 6 and 7 are formed by press blanking from a metal plate. Consequently, the sharp edge part of the outer circumferential portion of the first seal member 6 is laser welded to shaft 1, and the sharp edge part of the inner circumferential portion of the second seal member 7 is laser welded to sleeve 3.

Screw hole 32 shown in Fig. 10 is used for attaching a swing arm to this pivot assembly. In this fourth embodiment, at the time of laser welding of the first seal member 6, a pre-load can be applied to inner ring 21.

The pivot assembly of the fourth embodiment can be manufactured by the same method as that of the first embodiment. Furthermore, since the first and second seal members 6 and 7 form a labyrinth, there is an added advantage that any discharge of gas, dirt and the like from the inner part of the assembly can be more effectively eliminated.

As described above, the present invention provides a pivot assembly for use in a hard disk drive having a laser welded seal member. The laser welded seal is a rather thin member of a preferred thickness of 0.3 - 1.5 mm. Because, during the conventional spot welding by means of electric resistance welding and gas welding, the welding heat reaches the inner ring and outer ring of the ball bearing the bearing precision is lowered by that thermal effect. Therefore, these methods were not used with conventional pivot assemblies. With the present invention, because the seal member is welded to the shaft and sleeve by laser welding, by narrowing the spot diameter of the laser beam to approximately 0.4 mm the depth of the welding seam can be made approximately 0.2 mm. Thus, the welding seam does not reach the portion of the bearing and lowering of the bearing precision can be prevented.

in order to make sure that a gap does not occur between the two elements to be laser welded, it is desirable that the fit relationship of the seal member with the shaft or sleeve be one that is slightly pressed in. However, even if both are pressed in, this does not mean that a gap and concave part are formed in the area that is laser beam irradiated. For example, when a chamfer is formed on the inner circumferential edge of the seal member, a concave part is formed between that chamfer and the outer circumference of the shaft, and when a laser beam is irradiates this area, a welding failure occurs due to the reduced diameter of the laser beam. However, if this diameter is increased the laser energy increases and the weld depth becomes deeper possibly reaching to the inner ring or the outer ring. Therefore, the beam diameter has to be carefully balanced for a each particular application.

According to the present invention as explained above, because a seal member is fixed by laser welding to the outer circumference of a shaft or the inner circumference of a sleeve there is no outgassing from the seal member. Furthermore, a pivot assembly can be supplied to the final hardening treatment without using a jig. Consequently, the jig manufacturing expense and the work in attaching and removing jigs with respect to the pivot assembly becomes unnecessary.

For the convenience of the reader, the above description has focused on a representative sample of all possible embodiments, a sample that teaches the principles of the invention and conveys the best mode contemplated for carrying it out. The description has not attempted to exhaustively enumerate all possible variations. Other undescribed variations or modifications may be possible. For example, where multiple alternative embodiments are described, in many cases it will be possible to combine elements of different embodiments, or to combine elements of the embodiments described here with other modifications or variations that are not expressly described. Many of those undescribed variations, modifications and variations are within the literal scope of the following claims, and others are equivalent.

## Claims

1. A pivot assembly for use in a hard disk drive comprising:
a pair of ball bearings (2), said ball bearings being spaced apart, each of said bearings further comprising an inner ring (21) and an outer ring (22);
a sleeve (3) extended between said outer rings of said ball bearings, said sleeve further comprising a spacer part (31); and a seal member (4) **characterised in that** the
seal member (4) contacts and presses one of said inner rings and outer rings to apply preload,
wherein said seal member is fixed to said sleeve by laser welding.

2. The pivot assembly for use in a hard disk drive according to Claim 1, wherein said seal member further comprises a sharp edge (44) formed at an outer circumferential border of said seal member, and wherein said laser welding is performed along said sharp edge.

3. The pivot assembly for use in a hard disk drive according to Claim 2, wherein said sharp edge has a radius of 0.1 mm or less.

4. The pivot assembly for use in a hard disk drive according to any preceding claim, wherein said spacer part is formed integrally with said sleeve.

5. The pivot assembly for use in a hard disk drive according to any preceding claim, wherein said spacer part is fixed to said sleeve.

6. A pivot assembly for use in a hard disk drive comprising:
a shaft (1);
a pair of ball bearings (2) mounted on said shaft, said ball bearings being spaced apart, each of said bearings further comprising an outer ring (22) and an inner ring (22);
a sleeve (3) extended between said outer rings of said ball bearings, said sleeve further comprising a spacer part (31); and a seal member (4); **characterised in that** the seal member (4), contacts and presses one of said inner rings or outer rings to apply preload
wherein said seal member is fixed to said shaft by laser welding.

7. The pivot assembly for use in a hard disk drive according to Claim 6, wherein said seal member further comprises a sharp edge formed at an inner circumferential border of said seal member, and wherein said laser welding is performed along said sharp edge.

8. The pivot assembly for use in a hard disk drive according to Claim 6 or 7 further comprising a second seal member, said second seal member being axially spaced from said seal member, wherein said second seal member is fixed to said sleeve by laser welding.

9. The pivot assembly for use in a hard disk drive according to Claim 8, wherein said second seal member further comprises a sharp edge formed at an outer circumferential border of said second seal member, and wherein said laser welding is performed along said sharp edge.

10. The pivot assembly for use in a hard disk drive according to any of Claims 7 to 9, wherein at least one of said sharp edges has a radius of 0.1 mm or less.

11. The pivot assembly for use in a hard disk drive according to any of Claims 6 to 10, wherein said spacer part is formed integrally with said sleeve.

12. The pivot assembly for use in a hard disk drive according to any of Claims 6 to 11, wherein said spacer part is fixed to said sleeve.

## Patentansprüche

1. Schwenkbaugruppe zum Einsatz in einem Festplattenlaufwerk, die umfasst:
ein Paar Kugellager (2), wobei die Kugellager beabstandet sind und jedes der Lager des Weiteren einen inneren Ring (21) sowie einen äußeren Ring (22) umfasst;
eine Buchse (3), die sich zwischen den äußeren Ringen der Kugellager erstreckt, wobei die Buchse des Weiteren einen Abstandshalteteil (31) und ein Dichtungselement (4) umfasst; **dadurch gekennzeichnet, dass** das Dichtungselement (4) mit einem der inneren Ringe oder der äußeren Ringe in Kontakt kommt und ihn presst, um Vorspannung auszuüben,
wobei das Dichtungselement durch Laserschweißen an der Buchse befestigt wird.

2. Schwenkbaugruppe zum Einsatz in einem Festplattenlaufwerk nach Anspruch 1, wobei das Dichtungselement des Weiteren eine scharfe Kante (44) umfasst, die an einem Außenumfangsrand des Dichtungselementes ausgebildet ist, und das Laserschweißen entlang der scharfen Kante durchgeführt wird.

3. Schwenkbaugruppe zum Einsatz in einem Festplattenlaufwerk nach Anspruch 2, wobei die scharfe Kante einen Radius von 0,1 mm oder weniger hat.

4. Schwenkbaugruppe zum Einsatz in einem Festplattenlaufwerk nach einem der vorangehenden Ansprüche, wobei der Abstandshalteteil integral mit der Buchse ausgebildet ist.

5. Schwenkbaugruppe zum Einsatz in einem Festplattenlaufwerk nach einem der vorangehenden Ansprüche, wobei der Abstandshalteteil an der Buchse befestigt ist.

6. Schwenkbaugruppe zum Einsatz in einem Festplattenlaufwerk, die umfasst:
eine Welle (1);
ein Paar Kugellager (2), die an der Welle angebracht sind, wobei die Kugellager beabstandet sind und jedes der Lager des Weiteren einen äußeren Ring (22) sowie einen inneren Ring (22) umfasst;
eine Buchse (3), die sich zwischen den äußeren Ringen der Kugellager erstreckt, wobei die Buchse des Weiteren einen Abstandshalteteil (31) und ein Dichtungselement (4) umfasst; **dadurch gekennzeichnet, dass** das Dichtungselement (4) mit einem der inneren Ringe oder der äußeren Ringe in Kontakt kommt und ihn presst, um Vorspannung auszuüben,
wobei das Dichtungselement durch Laserschweißen an der Welle befestigt wird.

7. Schwenkbaugruppe zum Einsatz in einem Festplattenlaufwerk nach Anspruch 6, wobei das Dichtungselement des Weiteren eine scharfe Kante (44) umfasst, die an einem Innenumfangsrand des Dichtungselementes ausgebildet ist, und das Laserschweißen entlang der scharfen Kante durchgeführt wird.

8. Schwenkbaugruppe zum Einsatz in einem Festplattenlaufwerk nach Anspruch 6 oder 7, die des Weiteren ein zweites Dichtungselement umfasst, wobei das zweite Dichtungselement von dem Dichtungselement axial beabstandet ist und das zweite Dichtungselement durch Laserschweißen an der Buchse befestigt wird.

9. Schwenkbaugruppe zum Einsatz in einem Festplattenlaufwerk nach Anspruch 8, wobei das zweite Dichtungselement des Weiteren eine scharfe Kante umfasst, die an einem Außenumfangsrand des zweiten Dichtungselementes ausgebildet ist, und das Laserschweißen entlang der scharfen Kante durchgeführt wird.

10. Schwenkbaugruppe zum Einsatz in einem Festplattenlaufwerk nach einem der Ansprüche 7 bis 9, wobei wenigstens eine der scharfen Kanten einen Radius von 0,1 mm oder weniger hat.

11. Schwenkbaugruppe zum Einsatz in einem Festplattenlaufwerk nach einem der Ansprüche 6 bis 10, wobei der Abstandshalteteil integral mit der Buchse ausgebildet ist.

12. Schwenkbaugruppe zum Einsatz in einem Festplattenlaufwerk nach einem der Ansprüche 6 bis 11, wobei der Abstandshalteteil an der Buchse befestigt ist.

## Revendications

1. Ensemble de pivot pour utilisation dans un lecteur de disque dur comprenant :
une paire de roulements à billes (2), lesdits roulements à billes étant espacés, chacun desdits roulements comprenant en outre un anneau intérieur (21) et un anneau extérieur (22) ;
un manchon (3) étendu entre lesdits anneaux extérieurs desdits roulements à bille, ledit manchon comprenant en outre une pièce d'espacement (31) ; et un élément d'étanchéité (4), **caractérisé en ce que** l'élément d'étanchéité (4) entre en contact avec l'un desdits anneaux intérieurs et desdits anneaux extérieurs et le presse afin d'appliquer une précharge,
dans lequel ledit élément d'étanchéité est fixé audit manchon par un soudage au laser.

2. Ensemble de pivot pour utilisation dans un lecteur de disque dur selon la revendication 1, dans lequel ledit élément d'étanchéité comprend en outre un bord aigu (44) formé à une limite circonférentielle extérieure dudit élément d'étanchéité et dans lequel ledit soudage au laser est effectué le long dudit bord aigu.

3. Ensemble de pivot pour utilisation dans un lecteur de disque dur selon la revendication 2, dans lequel ledit bord aigu a un rayon de 0,1 mm ou moins.

4. Ensemble de pivot pour utilisation dans un lecteur de disque dur selon l'une quelconque des revendications précédentes, dans lequel ladite pièce d'espacement est formée d'un seul tenant avec ledit manchon.

5. Ensemble de pivot pour utilisation dans un lecteur de disque dur selon l'une quelconque des revendications précédentes, dans lequel ladite pièce d'espacement est fixée audit manchon.

6. Ensemble de pivot pour utilisation dans un lecteur de disque dur, comprenant :
un arbre (1) ;
une paire de roulements à billes (2) montés sur ledit arbre, lesdits roulements à billes étant espacés, chacun desdits roulements comprenant en outre un anneau extérieur (22) et un anneau intérieur (21) ;
un manchon (3) étendu entre lesdits anneaux extérieurs desdits roulements à billes, ledit manchon comprenant en outre une pièce d'espacement (31) et un élément d'étanchéité (4) ; **caractérisé en ce que** l'élément d'étanchéité (4) entre en contact avec l'un desdits anneaux intérieurs ou anneaux extérieurs et le presse afin d'appliquer une précharge,
dans lequel ledit élément d'étanchéité est fixé audit arbre par un soudage au laser.

7. Ensemble de pivot pour utilisation dans un lecteur de disque dur selon la revendication 6, dans lequel ledit élément d'étanchéité comprend en outre un bord aigu formé à une limite circonférentielle extérieure dudit élément d'étanchéité et dans lequel ledit soudage au laser est effectué le long dudit bord aigu.

8. Ensemble de pivot pour utilisation dans un lecteur de disque dur selon la revendication 6 ou 7, comprenant en outre un second élément d'étanchéité, ledit second élément d'étanchéité étant axialement espacé dudit élément d'étanchéité, dans lequel ledit second élément d'étanchéité est fixé audit manchon par un soudage au laser.

9. Ensemble de pivot pour utilisation dans un lecteur de disque dur selon la revendication 8, dans lequel ledit second élément d'étanchéité comprend en outre un bord aigu formé à une limite circonférentielle extérieure dudit second élément d'étanchéité et dans lequel ledit soudage au laser est effectué le long dudit bord aigu.

10. Ensemble de pivot pour utilisation dans un lecteur de disque dur selon l'une quelconque des revendications 7 à 9, dans lequel au moins l'un desdits bords aigus a un rayon de 0,1 mm ou moins.

11. Ensemble de pivot pour utilisation dans un lecteur de disque dur selon l'une quelconque des revendications 6 à 10, dans lequel ladite pièce d'espacement est formée d'un seul tenant avec ledit manchon.

12. Ensemble de pivot pour utilisation dans un lecteur de disque dur selon l'une quelconque des revendications 6 à 11, dans lequel ladite pièce d'espacement est fixée audit manchon.
